Europäisches Patentamt

European Patent Office

Office européen des brevets

(11) Publication number: **0 366 616**
**A1**

# EUROPEAN PATENT APPLICATION

(21) Application number: 89830393.8

(22) Date of filing: 15.09.89

(51) Int. Cl.5: **B60P 3/20 , B62D 35/00**

(30) Priority: 26.10.88 IT 4015688

(43) Date of publication of application:
02.05.90 Bulletin 90/18

(84) Designated Contracting States:
DE ES FR GB

(71) Applicant: **SAPA S.p.A.**
**Via Buffolara, 88**
**I-43100 Parma(IT)**

(72) Inventor: **Tanara, Giovanni**
**Viale Duca Alessandro, 32**
**I-43100 Parma(IT)**

(74) Representative: **Lanzoni, Luciano**
**c/o BUGNION S.p.A. Viale Trento Trieste, 25**
**I-41100 Modena(IT)**

(54) **An aerodynamic refrigeration unit for motor vehicles.**

(57) The art field of industrial refrigeration systems embraces a mobile type of unit used in conjunction with cold enclosures built onto commercial motor vehicles; the unit disclosed is housed internally of an aerodynamically designed outer shell (2) that attaches to the vehicle body either rigidly, or pivotably if mounted above a tilting cab, and acts as a front spoiler for the vehicle body at one and the same time.

fig.2

EP 0 366 616 A1

## An aerodynamic refrigeration unit for motor vehicles

The present invention relates to an aerodynamically designed refrigeration unit for motor vehicles. Typically, refrigeration units for commercial motor vehicles are housed in a casing of parallelepiped shape hung from the upright front panel of a body structure incorporating the cold storage enclosure. In the case of trucks fitted with a forward-tilting cab, the refrigeration unit is mounted to the body at a given height from the cab roof so as to leave adequate clearance for the tilt action.

Such an arrangement considerably affects the aerodynamic efficiency of the vehicle, as a vortex is set up in the gap left between compressor and cab which offers enormous resistance to the truck's forward motion.

Attempts have been made to overcome the drawback in question by fitting a conventional spoiler to the cab roof, in front of the refrigation unit. Such an expedient has proven inadequate however, as with the spoiler mounted forward of the refrigeration unit, air is unable to reach the condenser located internally of the unit.

Needless to say, a certain minimum of ventilation is required in order to cool the condenser, and if the supply of air is insufficient, operation of the entire refrigeration system will be jeopardized. Accordingly, the object of the present invention is to overcome the drawbacks described above, and in particular, to provide a refrigeration unit that will enable a pivoted truck cab to tilt forward without difficulty, whilst ensuring an adequate flow of air to the condenser and offering minimal aerodynamic resistance.

The stated object is fully realized, with others besides, by adoption of an aerodynamically designed refrigeration unit for motor vehicles according to the invention, which is characterized in that it comprises an outer shell of aerodynamic embodiment, affording at least one grille through which a flow of cooling air is admitted to the condenser of the refrigeration equipment.

The refrigeration unit disclosed also comprises a frame fastened to the upright front panel of a refrigerated truck body, to which the shell is pivotably attached, and distancing means installed between the frame and the shell which allow the refrigeration unit to be tilted upward or swung to one side.

The invention will now be described in detail, by way of example, with the aid of the accompanying drawings, in which:

fig 1 is the front elevation of a refrigeration unit according to the present invention, seen in perspective;

fig 2 is a side elevation of the refrigeration unit shown in fig 1, seen in perspective.

With reference to the above drawings, 1 denotes a refrigeration unit, in its entirety, comprising an outer shell 2 of aerodynamic embodiment affording two openings 3, each spanned by a grille.

The shell 2 comprises:
-a flat base 4 disposed parallel with the roof of the cab 5 of a vehicle to which the unit is fitted;
-a rear panel 6 disposed parallel with the upright front panel 13 of the truck body by which the cold storage enclosure is encompassed; and,
-a front panel 7 that is suitably angled and merged with wings 8 at either side, in the manner of a spoiler, in such a way as to exhibit an aerodynamic contour.

The shell houses a mobile refrigeration unit, of which the components are conventional and therefore not illustrated.

9 denotes a flexible seal associated with the flat base 4 of the shell, hence parallel with the roof of the cab, which engages the roof in an airtight fit so as to ensure that no draught can penetrate between the cab and the shell.

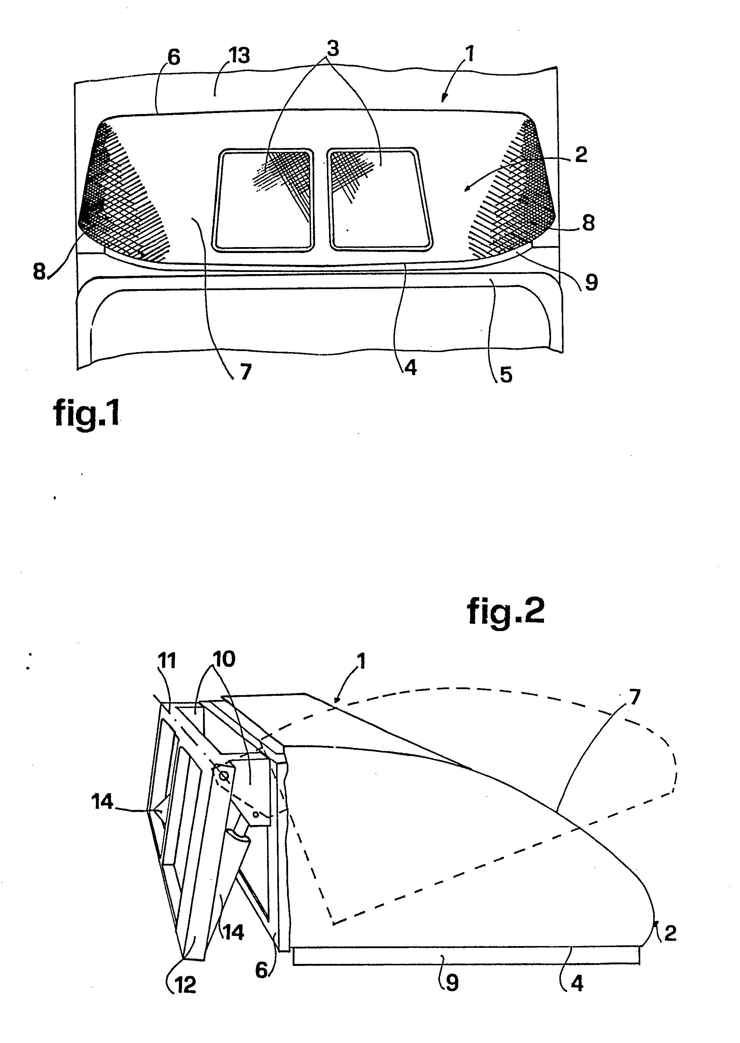

Turning now to fig 2, the shell further comprises two lugs 10 welded to the rear panel 6 which are hinged, about an axis denoted 11, to a frame 12 that fastens to the upright front panel 13 of the refrigerated truck body.

A further link is established between the lugs 10 and the frame 12, by way of respective hydraulic cylinders 14 that serve to raise the refrigeration unit bodily from the roof of the cab as illustrated by the phantom line of fig 2, thus leaving the cab free to tilt forward.

It will be clear that a refrigeration unit embodied in accordance with the foregoing description can be installed in direct contact with the roof of the cab, and thus ensure high aerodynamic efficiency; moreover, the unit is easily separated from the roof when the need arises to tilt the cab forward.

By locating a seal between the outer shell 2 of the refrigeration unit and the cab 5 of the vehicle, shell and cab become a single structure denying any access to air that would set up a vortical draught. In an alternative embodiment of the invention (not illustrated), the seal 9 could be replaced by a rim fitted to the roof of the cab, serving similarly to disallow any penetration of air between the cab and the base of the spoiler.

The two cylinders 14 constitute means by which to distance the refrigeration unit from the cab, and whilst in the example illustrated, such distancing means are hydraulic and operate by causing the unit to rotate upward, it will be clear that alternative embodiments (not illustrated) might be provided with mechanical or electric distancing means.

Similarly, the option exists of distancing the unit from the cab in a sideways direction by rotation about a vertical axis, without straying from within the bounds of protection afforded by the appended claims.

Needless to say, where trucks are designed with a fixed cab, the frame 12 and cylinders 14 can be eliminated without affecting the embodiment of the spoiler shell, which retains its aerodynamic shape.

## Claims

1) An aerodynamic refrigeration unit for motor vehicles,
characterized
in that it comprises an outer shell (2) of aerodynamic embodiment affording at least one grille (3) through which cooling air is able to reach the condenser of the refrigeration equipment.

2) A refrigeration unit as in claim 1, wherein the outer shell (2) comprises:
-a first panel (4) disposed parallel with and offered flat to the roof of a motor vehicle cab;
-a second panel (6) disposed at right angles to the first panel and substantially parallel with the upright front panel (13) of the body structure by which the refrigerated enclosure of the vehicle is encompassed;
-front and side panels (7, 8) embodied in the manner of a spoiler.

3) A refrigeration unit as in claim 2, comprising a flexible seal (9) associated with the panel (4) of the shell (2) that is disposed parallel with and offered flat to the roof of the motor vehicle cab.

4) A refrigeration unit as in preceding claims, comprising:
-a frame (12), stably attached to the upright front panel (13) of the refrigerated body structure and hinged to the second panel (6) of the shell (2);
-distancing means (14) located between the frame and the shell and serving to move the refrigeration unit upwards or sideways.

5) A refrigeration unit as in claim 4, comprising:
-a frame (12), stably attached to the upright front panel (13) of the refrigerated body structure and hinged to the second panel (6) of the shell (2) about a horizontal axis (11);
-at least one hydraulic cylinder (14) located between the frame and the shell and serving to rotate the refrigeration unit upwards.

fig.1

fig.2

European Patent Office

**EUROPEAN SEARCH REPORT**

Application Number

EP    89 83 0393

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4310192  (FITZGERALD)<br>* column 4, line 4 - column 6, line 45; figures 1-7 * | 1 | B60P3/20<br>B62D35/00 |
| A | | 2 | |
| Y | | 4, 5 | |
| | --- | | |
| A | FR-A-2336274 (GROSSKOPF)<br>* page 4; claims 1-5; figures 1, 2 * | 1, 2 · | |
| Y | | 4, 5 | |
| | --- | | |
| X | DE-A-2949128 (GEIGER)<br>* pages 1 - 2; claims 1, 4 *<br>* figures * | 1 | |
| Y | | 2, 3 | |
| | --- | | |
| Y | US-A-4379583 (TAYLOR)<br>* column 3, line 61 - column 4, line 18; figures 1, 4-8 * | 2, 3 | |
| | --- | | |
| X | US-A-4078395 (CROWE)<br>* column 2, line 32 - column 4, line 7; figures 1-6 * | 1 | TECHNICAL FIELDS SEARCHED (Int. Cl.5 ) |
| A | | 2 | B60P<br>B62D<br>B60H |
| | ----- | | |

The present search report has been drawn up for all claims

| Place of search | Date of completion of the search | Examiner |
|---|---|---|
| THE HAGUE | 30 JANUARY 1990 | ESPEEL R. |